# EUROPÄISCHE PATENTSCHRIFT

(11) **EP 2 689 230 B1**
(45) Veröffentlichungstag und Bekanntmachung des Hinweises auf die Patenterteilung: **06.05.2020**
(21) Anmeldenummer: 12717208.8
(22) Anmeldetag: 21.03.2012
(51) Int. Cl.: G01N 1/28

(54) **LASER-MIKRODISSEKTIONSVERFAHREN UND LASER-MIKRODISSEKTIONSVORRICHTUNG**
LASER MICRODISSECTION METHOD AND LASER MICRODISSECTION DEVICE
PROCÉDÉ DE MICRODISSECTION AU LASER ET DISPOSITIF DE MICRODISSECTION AU LASER

(30) Priorität: 22.03.2011 DE 102011001474
(43) Veröffentlichungstag der Anmeldung: 29.01.2014
(73) Patentinhaber: Carl Zeiss Microscopy GmbH, 07745 Jena (DE)
(72) Erfinder: GÖGLER, Michael, 82515 Wolfratshausen (DE)
(74) Vertreter: Sticht, Andreas
(86) Internationale Anmeldenummer: PCT/EP2012/055034
(87) Internationale Veröffentlichungsnummer: WO 2012/126961

(56) Entgegenhaltungen:
- EP-A1- 2 163 339
- EP-A2- 1 985 987
- WO-A1-01/73398
- WO-A1-01/79911
- WO-A1-2005/033669
- WO-A2-03/060477
- DE-A1-102007 035 582
- US-A1- 2002 164 678
- US-A1- 2008 194 011
- US-A1- 2010 090 108

## Beschreibung

Die vorliegende Erfindung betrifft Verfahren und Vorrichtungen zur Laser-Mikrodissektion.

Laser-Mikrodissektionssysteme werden häufig zur Bearbeitung, Separierung und/oder Gewinnung von biologischen Objekten, insbesondere mikroskopisch kleinen Objekten, eingesetzt.

Dabei werden interessierende Bereiche einer Probe mittels eines Laserstrahls, beispielsweise eines gepulsten Laserstrahls, ausgeschnitten. Die Probe kann dabei auf einen Träger, beispielsweise einer Folie, aufgebracht sein, welcher eine hohe Absorption für das verwendete Laserlicht aufweist.

Optional kann dann der ausgeschnittene Bereich mit einem laserinduzierten Transportprozess in einen Auffangbehälter transportiert werden.

Eigenschaften einer Schnittlinie bei einem derartigen Ausschneiden, beispielsweise Breite der Schnittlinie oder Unterbrechungsfreiheit der Schnittlinie, hängen dabei von teilweise einstellbaren Systemparametern, beispielsweise Laserparametern wie einer Laserenergie oder einer Repetitionsrate bei einem gepulsten Laser, oder auch anderen Systemparametern wie einer Fokuseinstellung oder einer durch Bewegung des Objekts und/oder des Laserstrahls hervorgerufenen Schneidgeschwindigkeit ab. Da verschiedene biologische Proben verschiedene Eigenschaften haben, ist es häufig nötig, die Systemparameter für jede Probe oder auch für jede Serie ähnlicher Proben einzustellen. Diesbezüglich ist aus der EP 1 985 987 A2 der Anmelderin eine gattungsgemäße Laser-Mikrodissektionsvorrichtung bekannt, mit welcher das Finden geeigneter Systemparameter mit Hilfe einer Referenzschnittlinie erleichtert wird.

Allerdings kann es vorkommen, dass ein Anwender nach dem Finden einer passenden Kombination von Systemparametern einen der Parameter verändern möchte. Beispielsweise ist es häufig einfacher, geeignete Parameter mit einer langsamen Schneidgeschwindigkeit zu finden. Für die tatsächliche Bearbeitung von Proben ist jedoch aus Zeitgründen häufig eine schnelle Schneidgeschwindigkeit wünschenswert oder nötig. In einem solchen Fall müssen herkömmlicherweise wieder ein oder mehrere Systemparameter neu eingestellt werden.

Aus der US 2003/0164678 A1 ist eine Vorrichtung zur Laser-Mikrodissektion bekannt, bei welcher eine Blende gestützt ausgewählt werden kann. Zudem können verschiedene Systemparameter die Laserintensität, Fokusposition des Laserstrahls und Blende automatisch gewählt werden, um ein "Optimum" zu erreichen. Die Einstellungen können auch automatisch verändert werden, beispielsweise um die Dickenänderung einer Probe zu berücksichtigen.

Aus der WO 03/060477 A2 ist ein optisches Schneidverfahren bekannt, bei welchem ein Ablationsprozess benutzt wird. Fünf Parameter können für diesen Ablationsprozess optimiert werden.

Die US 2008/194011 A1 offenbart ein Laser-Mikrodissektionssystem, bei welchem eine Punktdichte von Laserpunkten bezüglich einer Laserleistung adaptiert wird. Damit kann verhindert werden, dass ein Dissektat hängen bleibt, gekippt wird und dergleichen.

Die EP 2 163 339 A1 offenbart ein Lasersystem zum Schneiden von Blechen, bei welchem ebenfalls Laserparameter wechselseitig voneinander abhängen, wobei eine Schneidgeschwindigkeit in Abhängigkeit von einem Bahnverlauf variiert wird.

Ein weiteres Laser-Mikrodissektionssystem ist in der WO 01/79911 A1 offenbart.

Es ist daher eine Aufgabe der vorliegenden Erfindung, Verfahren und Vorrichtungen zur Laser-Mikrodissektion bereitzustellen, bei welchen das Einstellen und/oder das Ändern geeigneter Systemparameter erleichtert wird.

Diese Aufgabe wird gelöst durch ein Verfahren nach Anspruch 1 sowie ein Laser-Mikrodissektionssystem nach Anspruch 6. Die abhängigen Ansprüche definieren weitere Ausführungsbeispiele.

Durch das automatische Einstellen des mindestens einen zweiten Systemparameters bei dem Verfahren nach Anspruch 1 wird das Auffinden geeigneter Systemparameter erleichtert.

Das automatische Einstellen kann dabei auf Anforderung eines Benutzers oder auch ohne weiteres Zutun eines Benutzers erfolgen. Der gewünschte Wert kann ein vorgegebener Wert oder ein Wert innerhalb eines vorgegebenen Bereichs sein, beispielsweise eines durch einen Benutzer und/oder durch Systemgegebenheiten, z.B. Toleranzen, vorgegebenen Bereichs.

Systemparameter sind dabei allgemein Parameter, welche direkt die Einstellung von Komponenten des Laser-Mikrodissektionssystems betreffen. Beispiele hierfür sind Laserparameter wie beispielsweise Laserenergie oder Laserrepetitionsrate bei gepulsten Lasern, Schneidgeschwindigkeit beispielsweise über die Bewegung eines Probenhalters oder eine Bewegung eines Laserstrahls, Fokus eines Laserstrahls, Apertur eines Laserstrahls oder das Profil, d.h. die laterale Intensitätsverteilung oder Strahlform eines Laserstrahls. Schnittlinienparameter sind demgegenüber Parameter, welche eine bei einer bestimmten Einstellung der Systemparameter entstehende Schnittlinie beschreiben, beispielsweise ein deren Schnittbreite bezeichnender Parameter oder ein Parameter, welcher angibt, ob die Schnittlinie unterbrechungsfrei ist. Der gewünschte Schnittlinienparameter kann also beispielsweise angeben, dass ein unterbrechungsfreier Schnitt ausgeführt wird.

Erfindungsgemäß umfasst das Verfahren nach Anspruch 1 ein Erhöhen der Schneidgeschwindigkeit von der ersten Schneidgeschwindigkeit zu der zweiten Schneidgeschwindigkeit In diesem Fall erfolgt das automatische Einstellen des mindestens einen zweiten Systemparameters derart, dass der gewünschte Wert des Schnittlinienparameters zumindest näherungsweise konstant gehalten wird, beispielsweise innerhalb eines vorgegebenen Bereichs, z.B. eines durch einen Benutzer und/oder durch Systemgegebenheiten wie Toleranzen oder möglicher Werte der Systemparameter vorgegebenen Bereichs. In anderen Worten kann das Konstanthalten soweit unter den Systemgegebenheiten möglich erfolgen. Der zuvor eingestellte Wert kann beispielsweise ein von einem Benutzer eingestellter Wert sein.

Hierzu wird ausgenutzt, dass die Schnittlinienparameter zumindest teilweise von mehreren Systemparametern abhängig sind und somit Veränderungen des mindestens einen ersten Systemparameters durch Veränderungen des mindestens einen zweiten Systemparameters ausgeglichen werden können. Auf diese Weise können sich beispielsweise Schneidgeschwindigkeit und Laserenergie, Repetitionsrate und Laserenergie, Schneidgeschwindigkeit und Repetitionsrate und/oder Stellung eines Laserfokus und Laserenergie wechselseitig ausgleichen.

Zum automatischen Einstellen wird auf mindestens eine Kennlinie zurückgegriffen, welche eine Abhängigkeit des mindestens einen zweiten Systemparameters von dem mindestens einen ersten Systemparameter beschreibt, welche beispielsweise in einem Speicher abgelegt ist.

Eine erfindungsgemäße Laser-Mikrodissektionsvorrichtung nach Anspruch 6 umfasst eine Lasereinrichtung zum Erzeugen eines Laserstrahls, eine Aufnahme, beispielsweise einen Mikroskoptisch, zur Aufnahme einer zu untersuchenden Probe sowie eine Steuereinrichtung zum Steuern der Laser-Mikrodissektionsvorrichtung. Zudem umfasst die erfindungsgemäße Vorrichtung eine Benutzerschnittstelle zur Einstellung oder Auswahl von Funktionen der Steuervorrichtung. Die Steuervorrichtung ist zur Durchführung eines der Verfahren nach einem der Ansprüche 1 bis 5 ausgestaltet. Die Kennlinie ist dabei in der Steuervorrichtung gespeichert.

Die oben beschriebenen Merkmale und Varianten können miteinander kombiniert werden, sofern nichts anderes angegeben ist.

Die Erfindung wird nachfolgend unter Bezugnahme auf die beigefügten Zeichnungen anhand von Ausführungsbeispielen näher erläutert. Es zeigen:
- Fig. 1: ein Ausführungsbeispiel einer erfindungsgemäßen Vorrichtung,
- Fig. 2: Beispiele für verschiedene Schnittlinien,
- Fig. 3: ein Flussdiagramm eines Verfahrens gemäß einem Ausführungsbeispiel,
- Fig. 4: ein Flussdiagramm eines Verfahrens gemäß einem weiteren Ausführungsbeispiel, und
- Fig. 5-8: Beispiele für Beziehungen zwischen verschiedenen Systemparametern.

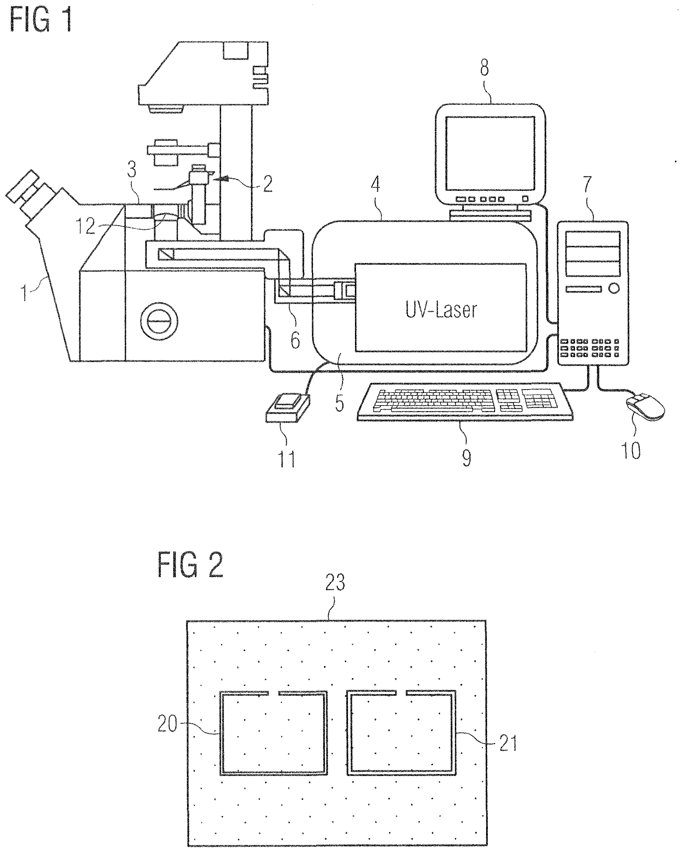

Im Folgenden werden Ausführungsbeispiele der vorliegenden Erfindung näher erläutert. Diesbezüglich ist in Fig. 1 ein Laser-Mikrodissektionssystem gemäß einem Ausführungsbeispiel der Erfindung dargestellt. Bei dem dargestellten Ausführungsbeispiel handelt es sich um einen sogenannten inversen Aufbau, bei welchem eine Probe von unten mit einem Laserstrahl bestrahlt werden kann. Die vorliegende Erfindung ist jedoch ebenso auf aufrechte, d.h. nicht inverse, Aufbauten anwendbar, bei denen die Bestrahlung mit einem Laserstrahl von oben erfolgt.

Das in Fig. 1 gezeigte Laser-Mikrodissektionssystem umfasst eine Lasereinrichtung 4, in der eine Laserlichtquelle zur Erzeugung eines Laserstrahls untergebracht ist. Des Weiteren ist in der Lasereinrichtung 4 eine Optik 6 untergebracht, über welche der Laserstrahl in ein Mikroskop 1 eingekoppelt wird und mit deren Hilfe der Laserfokus in der Objektebene bezüglich des optischen Fokus des Mikroskops 1 verschoben werden kann. In anderen Worten ist über die Optik 6 ein Fokus des von der Lasereinrichtung 4 erzeugten Laserstrahls unabhängig von einem Fokus des Mikroskops 1 einstellbar. Zur Verstellung des Fokus des Laserstrahls können beispielsweise Linsen der Optik 6 über einen Schrittmotor bewegt werden. Bei der Laserlichtquelle kann es sich beispielsweise um einen gepulsten UV-Stickstofflaser, beispielsweise mit einer Wellenlänge von 337 nm handeln, wobei die Energie eines Laserpulses in der Größenordnung von 100-500 µJ liegen kann, eine Pulsdauer in der Größenordnung von 3 ms liegen kann und eine Repetitionsrate, d.h. eine Pulsfrequenz, von 1-30 Hz vorliegen kann. Zu beachten ist, dass die obigen Zahlenwerte lediglich als Beispiel zu verstehen sind. Bei dem dargestellten Ausführungsbeispiel ist die Pulsenergie und/oder die Repetitionsrate einstellbar. Es können auch andere Laserlichtquellen als Stickstofflaser eingesetzt werden, beispielsweise ein Feststofflaser mit einem Frequenzvervielfacher, beispielsweise ein Feststofflaser mit einem Frequenzverdreifacher und einer resultierenden Wellenlänge von 355 nm. Derartige Feststofflaser weisen typischerweise eine Energie zwischen 1 und 200 µJ, eine Pulsdauer von ca. 1 ns und eine einstellbare Repetitionsrate zwischen 1 und 10000 Hz auf.

Zusätzlich oder alternativ zur Einstellung der Pulsenergie über die Laserlichtquelle selbst ist bei dem Ausführungsbeispiel der Fig. 1 ein Quarzfilter 5 senkrecht zum Laserstrahlpfad angeordnet, welcher automatisch oder auch manuell verstellt werden kann, um die Laserenergie zu verändern.

Bei dem in Fig. 1 gezeigten Ausführungsbeispiel wird der Laserstrahl über mehrere optische Elemente, beispielsweise Spiegel, in das Mikroskop 1 eingekoppelt und zu einem Objektiv 12 hin gelenkt. Der Durchmesser des auf einer Objektebene auftreffenden Laserstrahls ist dabei unter anderem von der numerischen Apertur des Objektivs 12 abhängig, wobei ein Objektiv mit einer relativ hohen numerischen Apertur Laserstrahldurchmesser von beispielsweise kleiner 1 µm ermöglicht.

Die Laserlichtquelle der Lasereinrichtung 4 kann bei einem Ausführungsbeispiel eine verstellbare Blende aufweisen, über welche eine Apertur der Laserlichtquelle einstellbar ist.

Der über das Objektiv 12 emittierte Laserstrahl trifft auf einen motorisierten und automatisch steuerbaren Mikroskop- oder Trägertisch 3, welcher als Aufnahme für eine Probe dient. Beispielsweise kann auf den Trägertisch 3 ein Träger mit einem zu bearbeitenden biologischen Material, d.h. einem biologischen Objekt, angeordnet sein. Optional ist weiterhin oberhalb des Trägertisches 3 ein vorzugsweise ebenfalls motorisierter und automatisch steuerbarer Manipulator 2 bereitgestellt, wobei sowohl der Trägertisch 3 als auch der Manipulator 2 ebenso manuell verstellbar sein können. Die Komponenten 2 und 3 ermöglichen eine exakte Objektpositionierung mit hoher Präzision sowie eine rechnergestützte vollautomatische Durchführung von Mikromanipulationsprozeduren.

Der motorisierte Trägertisch 3 ist zumindest in der x/y-Ebene, d.h. in der Ebene des Trägertisches, verfahrbar. Der Manipulator 2 kann sowohl in x/y-Richtung als auch in z-Richtung, d.h. senkrecht zum Trägertisch 3 verfahren werden. An dem Manipulator 2 kann beispielsweise eine Nadel oder Mikropipette zur Durchführung einer Mikroinjektion angebracht sein. Ebenso kann an dem Manipulator 2 eine Auffangvorrichtung angebracht sein, um von dem Träger kommende herausgelöste Bereiche biologischer Objekte aufzufangen. Der Manipulator 2 kann somit insbesondere als Halteeinrichtung für Komponenten wie eine Nadel, eine Mikropipette oder eine Auffangvorrichtung dienen.

Bei dem Mikroskop 1 kann es sich um ein beliebig ausgestaltetes Mikroskop handeln. Insbesondere ist sowohl die Verwendung eines inversen als auch eines aufrechten Mikroskops oder eines Lasermikroskops denkbar. Bei dem in Fig. 1 dargestellten Mikroskop 1 handelt es sich um ein inverses Mikroskop, bei welchem der Laserstrahl von unten auf den Trägertisch 3 trifft, um darauf befindliche biologische Objekte zu schneiden und gegebenenfalls mit einem laserinduzierten Transportprozess zu einer an dem Manipulator 2 befindlichen Auffangvorrichtung zu transportieren. Bei einem aufrechten Aufbau trifft hingegen der Laserstrahl von oben auf den Träger, so dass beispielsweise aus einem biologischen Objekt ausgeschnittene Teile nach unten auf eine unterhalb des Trägertisches 3 befindliche Auffangvorrichtung fallen können, bzw. dorthin transportiert werden können.

Das Mikroskop 1 kann mit einer (nicht explizit dargestellten) Bildaufnahmeeinheit, insbesondere in Form eines Bildsensors wie eines CCD-Sensors ("Charged Coupled Device") oder CMOS-Sensors versehen sein, welche ein auf dem Träger 3 befindliches biologisches Objekt aufnehmen kann. Das Signal einer derartigen Bildaufnahmeeinheit wird einem Computer 7 zugeführt und dort verarbeitet, so dass das entsprechende Videobild in Echtzeit auf einem Bildschirm 8 des Computers 7 dargestellt werden kann. Zusätzlich oder alternativ kann das Mikroskop 1 zur direkten visuellen Kontrolle des auf dem Trägertisch 3 befindlichen biologischen Objekts eingerichtet sein. Einzelne aufgenommene Bilder können auf einem geeigneten Speichermedium mit Hilfe des Computers 7 gespeichert werden.

Der Computer 7 bzw. ein oder mehrere darin befindliche Mikroprozessoren in Verbindung mit auf dem Computer laufender Software dient bei dem Ausführungsbeispiel der Fig. 1 als Steuervorrichtung verschiedener Funktionen des Laser-Mikrodissektionssystems. Die Software kann dabei sowohl über einen auswechselbaren Datenträger, beispielsweise eine CD-ROM, eine DVD-ROM oder eine Chipkarte, in den Computer 7 geladen werden oder sich auf einer in dem Computer 7 befindlichen Festplatte oder einem fest integrierten Speichermedium befinden. Es ist zu bemerken, dass statt des Computers 7 auch andere Arten von Steuervorrichtungen möglich sind, beispielsweise Steuervorrichtungen mit Mikroprozessoren und festen, beispielsweise in einem Nur-Lesespeicher (ROM) befindlichen Programmen.

Die mit Hilfe des Computers 7 realisierte Steuervorrichtung erlaubt insbesondere eine automatische Ansteuerung der Lasereinrichtung 3, des Trägertisches 3, des Manipulators 2 und/oder des Mikroskops 1, so dass beispielsweise Systemparameter wie Laserparameter eingestellt werden können und der Manipulator 2 bzw. der Trägertisch 3 automatisch verfahren werden können. Unter Systemparametern sind dabei Parameter zu verstehen, welche direkt die Funktion der Komponenten des Systems der Fig. 1 beeinflussen. Beispiele für Systemparameter sind Laserparameter wie beispielsweise eine Pulsenergie der verwendeten Laserlichtquelle oder einer Repetitionsrate der Laserlichtquelle, sowie auch weitere Systemparameter wie eine Fokuseinstellung des Laserstrahls oder eine Geschwindigkeit, mit welcher der Trägertisch 3 bewegt wird.

Zudem kann die Steuervorrichtung eine Auswahl und eine Bearbeitung gewünschter biologischer Objekte, welche sich auf dem Trägertisch 3 befinden, ermöglichen. Zur Einstellung bzw. Auswahl verschiedener Funktionen der Steuervorrichtung sind bei dem Ausführungsbeispiel der Fig. 1 Eingabemittel wie beispielsweise eine Tastatur 9 und eine Maus 10 vorgesehen. Zudem ist bei dem in Fig. 1 dargestellten Ausführungsbeispiel der Lasereinrichtung 4 auch ein Fußschalter 11 zugeordnet, durch dessen Betätigung der Laser manuell aktiviert werden kann. Tastatur 9, Maus 10 und Fußschalter 11 bilden zusammen mit dem Bildschirm 8 ein Beispiel für eine Benutzerschnittstelle der Laser-Mikrodissektionsvorrichtung. Es sind jedoch auch andere Mittel zur Ein- bzw. Ausgabe von Daten durch bzw. zu einem Benutzer möglich, beispielsweise sogenannte Joysticks, Anzeigen mit einzelnen Leuchtdioden und/oder akustische Signale.

Mittels der Laser-Mikrodissektionsvorrichtung der Fig. 1 können insbesondere Bereiche von biologischen oder auch anderen Objekten herausgeschnitten werden, d.h. eine Laser-Mikrodissektion durchgeführt werden. Hierzu kann beispielsweise durch einen Benutzer z.B. mittels der Maus 10 auf dem Bildschirm 8 eine gewünschte Schnittlinie vorgegeben werden sowie gewünschte Systemparameter für die Durchführung des Schnitts vorgegeben werden. Hierauf kann dann durch die Vorrichtung der Fig. 1 ein automatisches Durchführen des Schnitts erfolgen. Weitere mit Hilfe des Laser-Mikrodissektionssystems der Fig. 1 durchführbare Funktionen sind beispielsweise in der eingangs erwähnten EP 1 985 987 A2 oder auch der WO 03/036266 A1 und der WO 01/73398 A1 der Anmelderin detailliert beschrieben, so dass diese herkömmlichen Funktionen eines Laser-Mikrodissektionssystems hier nicht nochmals detailliert erläutert werden.

Zum Durchführen eines derartigen Schnitts kann dann der Trägertisch 3 bewegt werden, so dass der in diesem Fall stationäre Laserstrahl eine entsprechende Schnittlinie abfährt. Bei anderen Ausführungsbeispielen kann zusätzlich oder alternativ auch der Laserstrahl, beispielsweise durch entsprechende bewegliche Spiegel, Prismen oder durch holografische Techniken wie räumliche Lichtmodulatoren, auf dem biologischen Objekt bewegt werden.

Verschiedene Systemparameter können dabei verschiedene Gestalten einer resultierenden Schnittlinie bewirken. Ein einfaches Beispiel hierfür ist in Fig. 2 dargestellt. In Fig. 2 ist insbesondere ein biologisches Objekt 23 dargestellt, in welches zwei Schnittlinien 20, 21 geschnitten wurden. Dabei wurde die Schnittlinie 20 mit einer geringeren Pulsenergie, einer geringeren Repetitionsrate und/oder einer höheren Schneidgeschwindigkeit als die Schnittlinie 21 geschnitten, was zu einer breiteren Schnittlinie 21 führt.

Das biologische Objekt kann sich dabei insbesondere auf einer Trägerfolie oder Membran befinden, welche eine hohe Absorption für die verwendete Laserstrahlung aufweist.

Bei noch niedrigerer Repetitionsrate oder Laserenergie bzw. noch höherer Schneidgeschwindigkeit als für die Schnittlinie 20 verwendet können dann auch Unterbrechungen in der Schnittlinie auftreten.

Parameter, welche Form und Aussehen einer Schnittlinie beschreiben, werden im Folgenden wie bereits erwähnt als Schnittlinienparameter bezeichnet. Beispielsweise ist die Breite einer Schnittlinie ein derartiger Schnittlinienparameter. Ein anderer Schnittlinienparameter kann beispielsweise angeben, ob die Schnittlinie unterbrechungsfrei ist oder nicht, also gleichsam ein Parameter mit nur zwei möglichen Werten sein. Die Schnittlinienparameter hängen somit von den oben beschriebenen Systemparametern ab.

Um geeignete Systemparameter für ein zu behandelndes biologisches Objekt zu finden, können beispielsweise wie in der EP 1 985 987 A2 beschriebene Probeschnitte durchgeführt werden, welche dann mit Referenzschnitten verglichen werden. Auch eine vollständig manuelle Einstellung derartiger Schnittlinienparameter ist möglich. Dabei ist es beispielsweise hilfreich, eine relativ geringe Schneidgeschwindigkeit, d.h. beispielsweise eine geringe Verfahrgeschwindigkeit des Trägertisches 3, zu wählen, da dann die Einstellung erleichtert wird. Auf der anderen Seite kann es dann für die tatsächliche Bearbeitung von biologischen Objekten aus Zeitgründen vorteilhaft sein, eine höhere Schneidgeschwindigkeit zu wählen, wobei, wie oben erläutert, die Schneidgeschwindigkeit auch die Schnittlinienparameter beeinflusst.

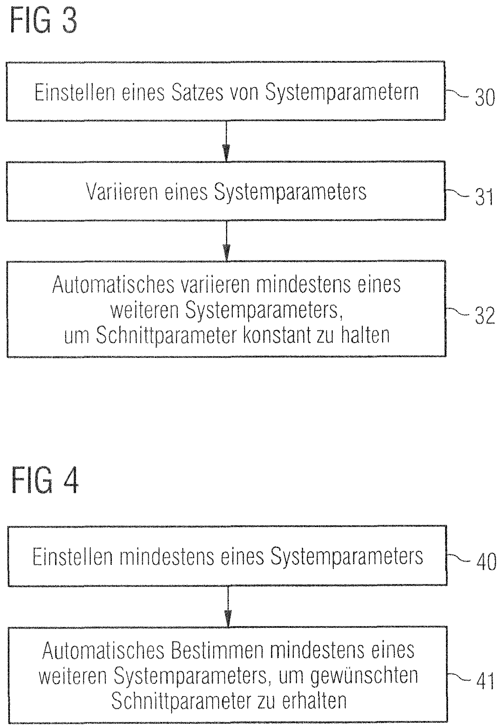

Bei einem Ausführungsbeispiel der Erfindung stellt die Steuervorrichtung des Laser-Mikrodissektionssystems, beispielsweise der Computer 7 der Fig. 1, Funktionen bereit, welche beim Ändern eines Systemparameters, beispielsweise der Schneidgeschwindigkeit, andere Systemparameter automatisch anpassen, um Schnittlinienparameter möglichst konstant zu halten, beispielsweise auf Werten zu halten, welche einer anfänglichen Einstellung der Systemparameter entsprechen. Ein entsprechendes Verfahren, welches beispielsweise auf dem Computer 7 der Fig. 1 implementiert sein kann und dabei insbesondere in eine entsprechende Steuersoftware integriert sein kann, wird nunmehr unter Bezugnahme auf Fig. 3 näher erläutert.

In einem Schritt 30 des Verfahrens der Fig. 3 wird ein Satz von Systemparametern eingestellt. Dies kann beispielsweise ganz oder teilweise durch einen Benutzer eines Laser-Mikrodissektionssystems erfolgen. Hierzu können beispielsweise Probeschnitte auf einem biologischen Objekt durchgeführt werden und die Systemparameter derart verändert werden, dass gewünschte Schnittlinienparameter, beispielsweise eine unterbrechungsfreie Schnittlinie und/oder eine gewünschte Schnittbreite, beispielsweise innerhalb eines gewünschten Bereichs, erhalten werden. Wie bereits erwähnt kann dieses Einstellen des Satzes von Systemparametern auch unterstützt durch das System, d.h. zumindest teilautomatisch, erfolgen.

Wenn ein Satz von Systemparametern gefunden ist, welcher zu einer gewünschten Schnittlinienqualität, d.h. zu gewünschten Schnittlinienparametern führt, kann durch einen Benutzer eingegeben werden, dass nunmehr die Schnittlinienparameter den gewünschten entsprechen. Beispielsweise kann das durch eine entsprechende Eingabe über die Tastatur 9 oder die Maus 10 in Fig. 1 erfolgen, beispielsweise durch Anklicken eines bestimmten Feldes auf dem Bildschirm 8 mittels der Maus 10. Es ist jedoch auch möglich, einen anfänglichen Satz von Systemparametern automatisch zu bestimmen, z.B. derart, dass bei einer vorgegebenen Schnittgeschwindigkeit ein unterbrechungsfreier Schnitt vorliegt.

In einem Schritt 31 wird dann ein Systemparameter variiert. Beispielsweise kann eine Schnittgeschwindigkeit, beispielsweise eine Geschwindigkeit der Bewegung des Trägertisches 3 der Fig. 1, erhöht werden.

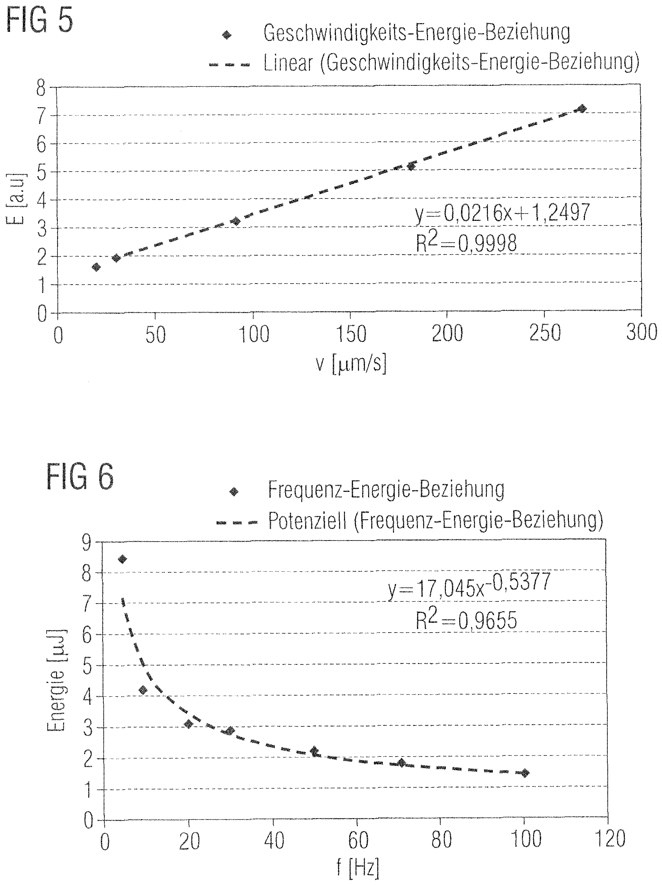

In Schritt 32 wird dann automatisch mindestens ein weiterer Systemparameter variiert, um einen oder mehrere in Schritt 30 erlangte Schnittlinienparameter zumindest näherungsweise konstant zu halten, z.B. innerhalb eines vorgegebenen Bereichs zu halten. Hierzu wird, wie später unter Bezugnahme auf die Fig. 5-8 noch detaillierter erläutert werden wird, auf gespeicherte wechselseitige Abhängigkeiten zwischen den Systemparametern zurückgegriffen. Beispielsweise kann bei einer Erhöhung der Schnittgeschwindigkeit eine Pulsenergie und/oder eine Repetitionsrate eines verwendeten Lasers erhöht werden.

Variieren in Schritt 31 das eigentliche Bearbeiten des biologischen Objekts mit höherer Schnittgeschwindigkeit erfolgen kann, wobei ein oder mehrere gewünschte Schnittlinienparameter, beispielsweise eine Unterbrechungsfreiheit der Schnittlinie, beibehalten werden.

Ein weiteres Verfahren, das kein Ausführungsbeispiel darstellt und welches zusätzlich oder alternativ zu dem Verfahren von Fig. 3 in einer Steuerung einer Laser-Mikrodissektionsvorrichtung, beispielsweise in dem Computer 7 der Fig. 1, implementiert sein kann, ist in Fig. 4 dargestellt.

In einem Schritt 40 wird mindestens ein Systemparameter eingestellt. Dies kann beispielsweise durch einen Benutzer erfolgen. Beispielsweise kann ein Benutzer eine gewünschte Energie und Pulsrate eingeben.

In Schritt 41 wird mindestens ein weiterer Systemparameter, beispielsweise alle in Schritt 40 nicht eingestellten Systemparameter, berechnet, um einen gewünschten Schnittlinienparameter zu erhalten. In dem obigen Beispiel, bei welchem in Schritt 40 Energie und Pulsrate angegeben werden, kann beispielsweise in Schritt 41 dann automatisch eine passende Schneidgeschwindigkeit eingestellt werden, beispielsweise um einen unterbrechungsfreien Schnitt zu erhalten und/oder um eine gewünschte Schnittbreite zu erhalten. Auch hierzu kann auf abgespeicherte Zusammenhänge zwischen den verschiedenen Systemparametern zurückgegriffen werden, um das automatische Bestimmen durchzuführen.

Derartige Beziehungen zwischen Systemparametern können beispielsweise für verschiedene gewünschte Schnittlinienparameter und/oder für verschiedene Arten von biologischen Objekten oder anderen Proben und/oder für verschiedene Arten von Trägem, beispielsweise für verschiedene Arten von laserabsorbierenden Folienträgern, experimentell ermittelt und dann abgespeichert werden. Zwischen verschiedenen aufgenommenen Messpunkten kann interpoliert werden. Einige Beispiele für derartige Messungen, welche gleichsam einer Kalibrierung der Laser-Mikrodissektionsvorrichtung zur Anwendung der oben beschriebenen erfindungsgemäßen Verfahren entspricht, werden im Folgenden unter Bezugnahme auf Fig. 5-8 erläutert. Dabei kann eine derartige Kalibrierung beispielsweise bereits herstellerseitig vorgenommen werden, sie kann jedoch bei einem Benutzer eines Laser-Mikrodissektionssystems vorgenommen werden.

In Fig. 5 ist ein Zusammenhang zwischen Pulsenergie und Schneidgeschwindigkeit dargestellt, wobei einzelne Messpunkte sowie mit einer gestrichelten Linie ein linearer Fit der Form E=a·v+b dargestellt ist, wobei E die Energie, v die Geschwindigkeit und a und b Fitparameter sind. Zur Messung wurde die Schneidgeschwindigkeit verändert und dann die Pulsenergie so angepasst, dass der Schnitt gerade unterbrechungsfrei war, d.h. ein Schnittlinienparameter, welcher die Unterbrechungsfreiheit angibt, konstant gehalten wurde.

In diesem Fall können beispielsweise die Parameter a und b abgespeichert werden, um beispielsweise bei dem Ausführungsbeispiel der Fig. 3 bei einer Variation der Schneidgeschwindigkeit in Schritt 31 dann in Schritt 32 die Pulsenergie entsprechend anzupassen.

In Fig. 6 ist eine Beziehung zwischen Pulsrate und Energie dargestellt, wobei die Energie in µJ und die Pulsrate in Hz angegeben ist. Zur Aufnahme der Messung wurde die Schneidgeschwindigkeit konstant gehalten, die Pulsrate des verwendeten UV-Lasers variiert und die Pulsenergie so angepasst, dass ein unterbrechungsfreier Schnitt vorlag, in diesem Fall auf einer Trägerfolie, insbesondere einer PEN-Folie. Es ergibt sich ein Zusammenhang der Form E=a·f^{-b}, wobei E die Energie, f die Pulsrate und a und b wieder Parameter sind. Wie bei dem Beispiel der Fig. 5 können entsprechende Parameter abgespeichert und beispielsweise in Ausführungsbeispielen der Fig. 1, 3 und 4 benutzt werden.

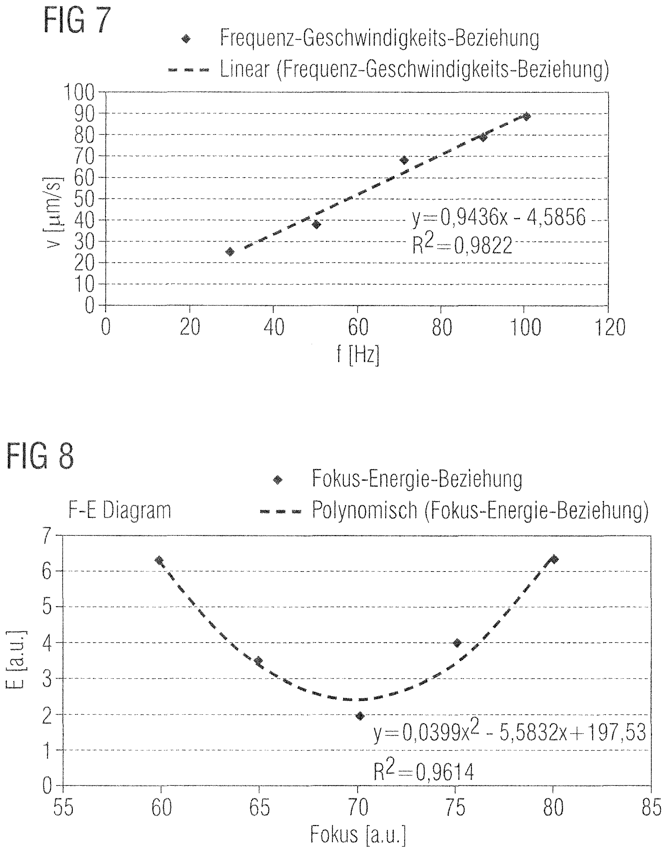

In Fig. 7 ist eine Beziehung zwischen der Repetitionsrate f in Hz und der Schneidgeschwindigkeit in µm/s dargestellt. Hier ergibt sich wiederum eine linear Beziehung der Form v=a·f+b, wobei a und b wiederum Parameter sind, die abgespeichert werden können. Auch diese Beziehung kann in den zuvor besprochenen Ausführungsbeispielen verwendet werden.

Schließlich ist in Fig. 8 eine Beziehung zwischen Laserfokus und Pulsenergie dargestellt. Bei der Aufnahme der in Fig. 8 dargestellten Kurve war bei Fokus 70 eine Schnittqualität optimal. Anschließend wurde der Laserfokus verändert, wobei zumindest in einem gewissen Rahmen eine Veränderung des Fokus durch Erhöhen der Laserenergie kompensiert werden kann, was jedoch in diesem Fall zu einem breiteren Schnitt führen kann, aber dennoch eine unterbrechungsfreie Schneidlinie sicherstellen kann. Daher kann grundsätzlich auch diese Beziehung, welche bei dem dargestellten Beispiel eine quadratische Beziehung der Form E=a·Fokus²+b·Fokus+c, wobei a, b und c Parameter sind, ist, verwendet werden.

Fig. 5-8 sind lediglich als Beispiele dafür zu verstehen, dass verschiedene Systemparameter sich gegenseitig zum Erreichen gleicher oder ähnlicher Schnittlinien, d.h. gleicher oder ähnlieher Schnittlinienparameter, ausgleichen können. Kurven wie in Fig. 5-8 gezeigt können wie bereits erwähnt durch Kalibrierung aufgenommen werden und entsprechen beispielsweise in Form entsprechender Fitparameter wie der oben erwähnten Parameter a, b und c oder auch in Form von Look-up Tabellen, in denen feste Werte hinterlegt sind, abgespeichert werden. Die Einstellung von Systemparametern wie beschrieben kann dann in Abhängigkeit der so abgespeicherten Kennlinie erfolgen. Derartige Aufnahmen können für verschiedene Arten von Proben bzw. Probenträgern vorgenommen werden. Neben den in Fig. 5-8 dargestellten Parametern können auch andere Parameter, beispielsweise eine Laserapertur oder ein Laserprofil, z.B. eine Strahlform, variiert werden. Zudem kann statt des Schnittlinienparameters, gemäß dem ein Schneiden gerade unterbrechungsfrei erfolgt, beispielsweise auch ein Schnittlinienparameter, welcher eine Schnittbreite angibt, konstant gehalten werden.

## Patentansprüche

1. Verfahren zur Laser-Mikrodissektion, umfassend:
anfängliches Einstellen von mindestens einem ersten Systemparameter und mindestens einem zweiten Systemparameter eines Laser-Mikrodissektionssystems derart, dass ein gewünschter Wert eines Form und Aussehen einer Schnittlinie (20, 21) des Laser-Mikrodissektionssystems beschreibenden Schnittlinienparameters vorliegt, wobei der mindestens eine erste Systemparameter eine Schneidgeschwindigkeit ist, wobei beim anfänglichen Einstellen der zweite Systemparameter durch einen Benutzer bei einer ersten Schneidgeschwindigkeit eingestellt wird,
Erhöhen der Schneidgeschwindigkeit von der ersten Schneidgeschwindigkeit auf eine zweite Schneidgeschwindigkeit, und
automatisches Einstellen des mindestens einen zweiten Systemparameters derart, dass der gewünschte Schnittlinienparameter zumindest innerhalb eines vorgegebenen Bereichs konstant gehalten wird, wobei das automatische Einstellen in Abhängigkeit von mindestens einer Kennlinie erfolgt, welche eine Abhängigkeit des mindestens einen zweiten Systemparameters von dem mindestens einen ersten Systemparameter bei mindestens einem vorgegebenen Schnittlinienparameter beschreibt.

2. Verfahren nach Anspruch 1, weiter umfassend ein Bestätigen des Schnittlinienparameters als konstant zu halten nach dem anfänglichen Einstellen.

3. Verfahren nach Anspruch 1 oder 2, weiter umfassend Schneiden eines biologischen Objekts mit dem mindestens einen ersten Systemparameter und dem mindestens einen zweiten Systemparameter.

4. Verfahren nach einem der Ansprüche 1-3, wobei der mindestens eine zweite Systemparameter ausgewählt ist aus einer Gruppe umfassend eine Energie eines Lasers (4), eine Repetitionsrate eines Lasers (4), ein Fokus eines Lasers (4), eine Apertur eines Lasers (4) und ein Profil eines Laserstrahls eines Lasers (4).

5. Verfahren nach einem der Ansprüche 1-4, wobei der Schnittlinienparameter ausgewählt ist aus einer Gruppe, umfassend eine Schnittbreite, und einem Parameter, der angibt, ob die Schnittlinie unterbrechungsfrei ist.

6. Laser-Mikrodissektionssystem, umfassend:
eine Lasereinrichtung (4),
eine Aufnahmeeinrichtung (3) für eine zu bearbeitende Probe,
eine Steuervorrichtung (7), und
eine Benutzerschnittstelle (9, 10, 11) zur Einstellung oder Auswahl von Funktionen der Steuervorrichtung (7),
wobei die Steuervorrichtung (7) zur Durchführung des Verfahrens nach einem der Ansprüche 1-5 eingerichtet ist,
wobei die Kennlinie in der Steuervorrichtung (7) gespeichert ist.

## Claims

1. Method for laser microdissection, comprising:
initially setting at least one first system parameter and at least one second system parameter of a laser microdissection system in such a way that a desired value of a cut line parameter describing shape and appearance of a cut line (20, 21) of the laser microdissection system is present, wherein the at least one first system parameter is a cutting speed, wherein upon initial setting, the second system parameter is set at a first cutting speed by a user,
increasing the cutting speed from the first cutting speed to a second cutting speed, and
automatically setting the at least one second system parameter in such a way that the desired cut line parameter is kept constant at least within a given range, wherein the automatic setting depends on at least one characteristic which describes a dependence of the at least one second system parameter on the at least one first system parameter for at least one given cut line parameter.

2. Method according to Claim 1, further comprising confirming that the cut line parameter is kept constant following the initial setting.

3. Method according to Claim 1 or 2, further comprising cutting a biological object using the at least one first system parameter and the at least one second system parameter.

4. Method according to any of Claims 1-3, wherein the at least one second system parameter is selected from a group comprising an energy of a laser (4), a repetition rate of a laser (4), a focus of a laser (4), an aperture of a laser (4) and a profile of a laser beam of a laser (4).

5. Method according to any of Claims 1-4, wherein the cut line parameter is selected from a group comprising a cutting width, and a parameter which specifies whether the cut line is seamless.

6. Laser microdissection system, comprising:
a laser apparatus (4),
a receiving apparatus (3) for a sample to be processed,
a control device (7), and
a user interface (9, 10, 11) for setting or selecting functions of the control device (7),
wherein the control device (7) is configured for implementing the method according to any of Claims 1-5,
wherein the characteristic is saved in the control device (7).

## Revendications

1. Procédé de microdissection par laser, comprenant :
le réglage initial d'au moins un premier paramètre de système et d'au moins un deuxième paramètre de système d'un système de microdissection par laser de telle sorte qu'une valeur souhaitée d'une forme et d'un aspect d'une ligne de coupe (20, 21) du paramètre de ligne de coupe décrivant le système de microdissection par laser soit présente, l'au moins un premier paramètre de système étant une vitesse de coupe, lors du réglage initial, le deuxième paramètre de système étant réglé par un utilisateur à une première vitesse de coupe,
l'augmentation de la vitesse de coupe de la première vitesse de coupe à une deuxième vitesse de coupe et
le réglage automatique de l'au moins un deuxième paramètre de système de telle sorte que le paramètre de ligne de coupe souhaité soit maintenu constant au moins à l'intérieur d'une plage prédéfinie, le réglage automatique étant effectué en fonction d'au moins une courbe caractéristique qui décrit une dépendance de l'au moins un deuxième paramètre de système à l'au moins un premier paramètre de système avec au moins un paramètre de ligne de coupe prédéfini.

2. Procédé selon la revendication 1, comprenant en outre une confirmation du maintien constant du paramètre de ligne de coupe après le réglage initial.

3. Procédé selon la revendication 1 ou 2, comprenant en outre la coupe d'un objet biologique avec l'au moins un premier paramètre de système et l'au moins un deuxième paramètre de système.

4. Procédé selon l'une des revendications 1 à 3, l'au moins un deuxième paramètre de système étant sélectionné dans un groupe comprenant une énergie d'un laser (4), un taux de répétition d'un laser (4), une focalisation d'un laser (4), une ouverture d'un laser (4) et un profil d'un rayon laser d'un laser (4).

5. Procédé selon l'une des revendications 1 à 4, le paramètre de ligne de coupe étant sélectionné dans un groupe comprenant une largeur de coupe et un paramètre qui indique si la ligne de coupe est sans interruption.

6. Système de microdissection par laser comprenant :
un dispositif à laser (4),
un dispositif d'accueil (3) pour un échantillon à traiter, un arrangement de commande (7) et
une interface utilisateur (9, 10, 11) destinée à régler ou à sélectionner des fonctions de l'arrangement de commande (7),
l'arrangement de commande (7) étant conçu pour mettre en œuvre le procédé selon l'une des revendications 1 à 5,
la courbe caractéristique étant mémorisée dans l'arrangement de commande (7).
